**Europäisches Patentamt**

**European Patent Office**

**Office européen des brevets**

(19)

(11) **EP 1 120 741 A2**

(12) **EUROPEAN PATENT APPLICATION**

(43) Date of publication:
**01.08.2001 Bulletin 2001/31**

(51) Int Cl.⁷: **G06T 1/00**

(21) Application number: **01200129.3**

(22) Date of filing: **15.01.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br> • **Wen, Xin**<br>  **Rochester, New York 14650-2201 (US)**<br> • **Honsinger, Chris W.**<br>  **Rochester, New York 14650-2201 (US)** |
| (30) Priority: **28.01.2000 US 491811** | (74) Representative:<br>**Lewandowsky, Klaus, Dipl.-Ing. et al**<br>**Kodak Aktiengesellschaft,**<br>**Patentabteilung**<br>**70323 Stuttgart (DE)** |
| (71) Applicant: **EASTMAN KODAK COMPANY**<br>**Rochester, New York 14650 (US)** | |

(54) **Adaptive data embedding method for improved image quality**

(57)     An improved method of embedding a message in a digital image, the method including the steps of generating a random phase carrier, convolving the message and the random phase carrier to form a dispersed message and adding the dispersed message to the digital image to form an image having an embedded hidden message, the improvement including the step of, modifying the amplitude of the dispersed message as a function of the lightness of the digital image prior to adding the dispersed message to the digital image.

FIG. 1

**EP 1 120 741 A2**

**Description**

The invention relates generally to the field of image processing, and in particular to embedding and extracting hidden messages in digital image data. This field is also referred to as data hiding, data embedding, information hiding, watermarking and also steganography.

U.S. Patent Application No. 08/848,112, filed April 28, 1997 and allowed September 23, 1999, entitled "Method For Generating An Improved Carrier For Use In An Image Data Embedding Application," by Honsinger et al., discloses a technique for embedding messages in digital images data. This method for embedding a hidden message into a digitized image includes the steps of: forming a digitized version of the desired message; generating a random phase carrier; convolving the digitized version of the desired message and the random phase carrier to form a dispersed message; and combining the dispersed message with the digitized image to form an image with an embedded hidden message. Hidden messages may be embedded in photographic images recorded on film and paper using conventional photographic printing techniques; or they may be embedded in images produced on printers such as ink jet and thermal dye transfer printers, by combining the dispersed message with a digital image using digital image processing techniques.

The hidden messages are recovered from the image by cross correlating the image containing the dispersed message with a decoding carrier to recover the embedded dispersed message and extracting the digital message data from the recovered dispersed message.

One challenge for embedding information into digital photographs is to preserve the quality of the original photograph and to insure that the hidden message is not visible in the image. There is a need therefore for an improved method of embedding a hidden message in an image.

The above noted need is met according to the present invention by providing an improved method of embedding a message in a digital image, the method including the steps of generating a random phase carrier, convolving the message and the random phase carrier to form a dispersed message and adding the dispersed message to the digital image to form an image having an embedded hidden message, the improvement including the step of, modifying the amplitude of the dispersed message as a function of the lightness of the digital image prior to adding the dispersed message to the digital image.

According to a preferred embodiment of the invention, the adaptive modification is made in such a way that the amplitude of the dispersed message is decreased in locations of the image that are less concealing of the embedded message and increased in locations that are more concealing of the embedded message.

The present invention has the advantage that when a hidden message is embedded in a digital image, the message is not visible in the high light areas of the image, and the signal to noise ratio of the image is increased in areas where the embedded message is less visible.

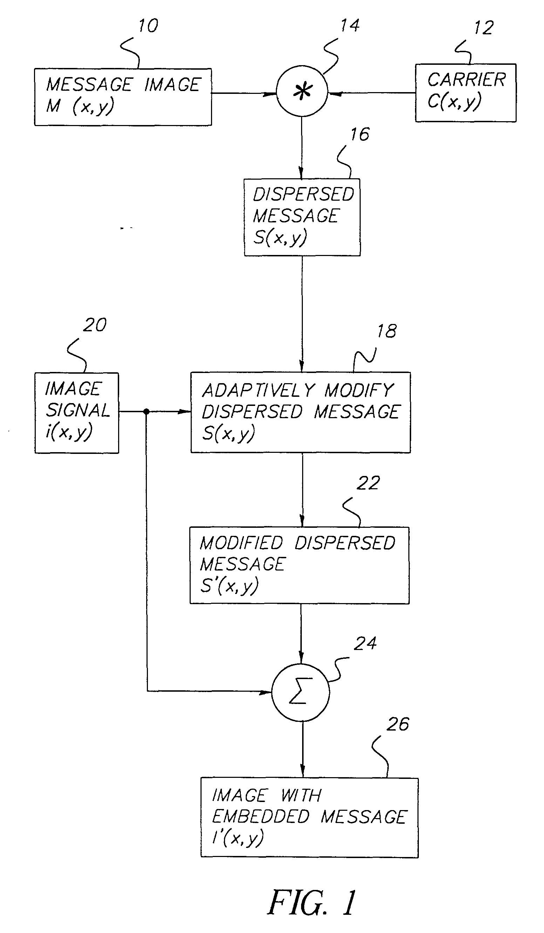

Fig. 1 is a flow chart illustrating the method of the present invention.

We discovered in printing tests of images having embedded dispersed messages using a digital silver halide printer and ink jet printers, and the message embedding method of the type disclosed in U.S. Patent Application No. 08/848,112, that noise from the embedded message is most visible in the very light areas of the image. In these areas, the image quality can be visibly affected by embedding a dispersed message. By contrast, the embedded message is much more easily concealed in areas of mid to high densities.

In the discussion that follows, it will be assumed that low pixel values correspond to light pixels, and vice-versa. It will be recognized by those skilled in the art that alternatively high pixel values may be employed to encode light areas of the image, in which case the polarity of the magnitudes of pixel values in the following discussion would be inverted. According to the present invention, the amplitude of the dispersed message is adaptively modified as a function of the pixel values of the digital image in which it is being embedded. If the amplitude of a pixel in the image is lower than a predetermined threshold, the amplitude of the dispersed message is decreased or set to zero. This prevents the embedded message from being visible in the very light areas of the image.

Referring to Fig. 1, an example of the method of embedding a dispersed message in an image according to the present invention will now be described. A message $M(x,y)$ is first provided 10. The message image $M(x,y)$ can include alpha numeric or graphic image objects. A random-phase carrier image $C(x,y)$ is also provided 12. The random-phase carrier image is characterized by pixel values randomly distributed in different pixel locations in such a way that the phase of the carrier is random. Details about the carrier image $C(x,y)$ are disclosed in the U.S. Patent Application No. 08/848,112, filed April 28, 1997 and allowed September 23, 1999, entitled "Method For Generating An Improved Carrier For Use In An Image Data Embedding Application," by Honsinger et al. The disclosure in this patent application is incorporated herein by reference. The message image $M(x,y)$ and the carrier image $C(x,y)$ are then convolved 14 to form a dispersed message $S(x,y)$ 16,

$$S(x,y) = M(x, y)^* C(x, y) \qquad (1)$$

where "*" denotes a convolution operation. The preferred form of the convolution operation is circular convolution as described in the textbook "Digital Signal Processing" by Alan V. Oppenheim and Ronald W. Schafer, Prentice-Hall, Inc., pp-101-115, which can be efficiently performed in either the space domain (image domain) or the Fourier frequency domain.

In accordance with the present invention, the pixel values in the dispersed message S(x,y) 16 is adaptively modified 18 according to the corresponding pixel values of the input digital image I(x,y) 20 to produce a modified dispersed message S'(x,y) 22:

$$S'(x,y) = f(S(x,y),I(x,y)) \qquad (2)$$

As shown in Equation (2), in general, the modified dispersed message S'(x,y) 22 is a function of the dispersed message S(x,y) and the input digital image I(x,y).

The modification 18 of the dispersed message S'(x,y) serves two purposes:

1) Minimizing the visible noise from the embedded dispersed message in the high light area of the image. As described, we discovered that the high light areas are the least tolerant to the embedded dispersed image S(x,y). A small amplitude in S(x,y) can be visible in the highlight areas. A simple technique in accordance with the present invention is to set the value of the pixels in the embedded dispersed message to zero in these areas.

2) Maximizing the amplitude of the embedded message at pixel locations of I(x,y) where the corresponding amplitude of the image pixels is large and the additive signal is more easily concealed.

According to a preferred embodiment of the invention, the processed dispersed message is formed as follows:

$$S'(x,y) = 0; \text{ if corresponding image pixel amplitude} <= \beta$$

$$= \alpha \times S(x,y); \text{ if corresponding image pixel amplitude} > \beta \qquad (3)$$

wherein $\beta$ is a threshold in image pixel density that is predetermined from the visual effect of noise at different density levels; and $\alpha$ is a scale factor that can be constant across different pixel values as long as they meet the threshold condition. The scale factor $\alpha$ can also be dependent on the value of the image pixels I(x,y) at each location. For example, $\alpha$ can be proportional to the value of the image so that the pixel amplitude in the modified dispersed message S'(x,y) is increased at pixel locations having high corresponding values in the image I(x,y).

It is known in the art that unless properly calibrated, the perceived lightness of an visual image is not proportional to the pixel values I(x,y). Using calibration methods well know in the art, the pixel values in I(x,y) can be correlated with the perceived lightness on a receiver or a monitor. The threshold $\beta$ is preferably determined using the perceived lightness (e.g. L*) as a metric for the impact on the human perception. If the embedded dispersed message S'(x,y) visibly alters the perception of the input image I(x,y) in certain image areas, the amplitude of the message pixel will be reduced or set to zero as shown in Equation (3).

Finally, the modified dispersed message S'(x,y) is added, pixel by pixel, 24 to the input digital image I(x,y) 20 to produce the digital image I'(x,y) 26 having the embedded dispersed message.

It should be noted that the modification of the dispersed message S(x,y) is a computation based on the perceived lightness of each pixel in the image I(x,y), not on the amount of spatial detail contained in a portion of the image. This operation is fundamentally different from the prior art method for minimizing visible noise using human eye sensitivity responses at different spatial frequencies as disclosed in U. S. Patent No.5,859,920, issued January 12, 1999 to Daly et al., entitled "Method for Embedding Digital Information in an Image." However, the present invention can be applied in conjunction with such a method involving human eye sensitivity responses

The method of the present invention has been implemented to embed a message of the photographer's name in a 512 by 512 pixel image having 8 bit levels per pixel. The pixel values are arranged such that the low pixel values represent highlight areas and high pixel values represent dark areas. The parameter $\alpha = 1$ because tone scale was previously calibrated. The parameter $\beta$ was varied in the range of 20 - 100. The optimal level was found to be around 60. The extraction of the embedding message was successful. The embedded message was not visible in the very light areas of the image. The image quality was significantly improved. The improvement in image quality is essential for reproducing photographic quality digital images having embedded messages.

The present invention is very useful for embedding data in digital images digitized from a photographic film or captured by a digital camera. The present invention is also useful for producing images having embedded information on a hardcopy using digital printing techniques such as inkjet, electrographic, or thermal printing. The details of embedding data in images digitized from photographic films or digital camera are disclosed in the above referenced and the commonly assigned U. S. Patent Application Serial No. 09/405,591, filed September 27, 1999, by the present inventors, entitled "Embedding Information in a Digital Image Digitized from a Developed Photographic Film." The details of embedding data in digitally printed images are disclosed in the above referenced and the commonly assigned U. S. Patent Application Serial No. 09/405,590, filed September 27, 1999, by the present inventors, entitled "Embedding Information in a Printed Image". The disclosure of these applications is incorporated herein by reference. The embedded message can be scaled both downward and upward depending on the amplitudes of the corresponding image pixel values I(x,y), at particular locations of the input image. If the amplitudes of particular image pixels are high, the amplitude of the corresponding dispersed message pixel S(x,y)can be scaled up without affecting image quality. This compensates for some of the losses in the embedded message due to the decrease of the pixel amplitudes as described above.

The decrease in signal-to-noise ratio (S/N) in extracting the embedded message in the high light areas of the image is also offset by the redundancies of embedding information in the image I'(x,y). In accordance with the present invention, it is desirable to embed the modified dispersed message I'(x,y) as a plurality of identical tiles in the digital image I'(x,y). The redundancy on one hand increases recoverability and reliability for the extraction process. On the other hand, the redundancy assures a S/N ratio much higher than threshold without the adaptive modification, as described above, which is tolerant to a small decrease in the Signal-to-Noise ratio in the high light areas of the image.

In our tests of the algorithm in accordance with the present invention, the embedded messages were easily extracted even when the embedded message was completely removed from 30% of the image area in an image having a lot of high light by setting the message pixels to zero in these areas. We have found that removing the embedded message in 30-50% of the image area only affects the Signal-to-Noise ratio by a small amount.

The present invention is preferably practiced in an image processing system including a source of digital images, such as a scanner, a computer programmed to process digital images, and an output device such as a thermal or inkjet printer. The method of the present invention may be sold as a computer program product including a computer readable storage medium bearing computer code for implementing the steps of the invention. Computer readable storage medium may include, for example; magnetic storage media such as a magnetic disc (e.g. a floppy disc) or magnetic tape; optical storage media such as optical disc or optical tape; bar code; solid state electronic storage devices such as random access memory (RAM) or read only memory (ROM); or any other physical device or medium employed to store a computer program.

## Claims

1. An improved method of embedding a message in a digital image, the method including the steps of generating a random phase carrier, convolving the message and the random phase carrier to form a dispersed message and adding the dispersed message to the digital image to form an image having an embedded hidden message, the improvement comprising the step of: prior to adding the dispersed message to the digital image, modifying the amplitude of the dispersed message as a function of the lightness of the digital image.

2. The improved method claimed in claim 1 wherein the amplitude of the dispersed message is decreased when the lightness is lower than a predetermined threshold to reduce the visibility of the embedded message in the digital image.

3. The improved method claimed in claim 2, wherein the amplitude of the dispersed message is set to zero where the lightness is lower than the predetermined threshold.

4. The improved method claimed in claim 1 wherein the amplitude of the dispersed message is increased where the lightness of the image is above a predetermined threshold to increase the signal to noise ratio of the embedded message.

5. The improved method claimed in claim 1 wherein the lightness of the dispersed message is the perceived lightness when the input image is printed or displayed.

6. A computer storage medium having instructions stored thereon for causing a computer to perform the method of claim 1.

MESSAGE IMAGE
M (x,y)

*

CARRIER
C(x,y)

DISPERSED
MESSAGE
S(x,y)

IMAGE
SIGNAL
i(x,y)

ADAPTIVELY MODIFY
DISPERSED MESSAGE
S(x,y)

MODIFIED DISPERSED
MESSAGE
S'(x,y)

Σ

IMAGE WITH
EMBEDDED MESSAGE
I'(x,y)

*FIG. 1*